# EUROPÄISCHE PATENTANMELDUNG

(11) **EP 1 510 847 A1**
(43) Veröffentlichungstag der Anmeldung: **02.03.2005**
(21) Anmeldenummer: 04104036.1
(22) Anmeldetag: 23.08.2004
(51) Int. Cl.: G02B 21/00, G02B 21/08

(54) **Stereooperationsmikroskop mit integrierter Auflicht-Beleuchtungseinrichtung**

(30) Priorität: 28.08.2003 DE 10339619
(71) Anmelder: Leica Microsystems (Schweiz) AG, 9445 Heerbrugg (CH)
(72) Erfinder: Sander, Ulrich, 9445, Rebstein (CH)
(74) Vertreter: Reichert, Werner F., Dr.

(57) **Zusammenfassung**

Die Erfindung betrifft ein Stereooperationsmikroskop mit einer Auflicht-Mikroskopbeleuchtung, die von einer in den Mikroskopaufbau (11) integrierten Beleuchtungseinrichtung (12) mit wenigstens einer Leuchtdiode (1), einer Beleuchtungsoptik (10) und vorzugsweise mit einer integrierten Stromversorgung (16) erzeugt wird.

## Beschreibung

Die Erfindung betrifft eine Beleuchtungseinrichtung für eine Auflichtbeleuchtung eines Stereooperationsmikroskops. Unter einer Auflichtbeleuchtung ist - im Unterschied zu einer Durchlichtbeleuchtung - eine Beleuchtung auf ein undurchsichtiges Präparat oder Objekt zu verstehen. Bei Operationsmikroskopen geschieht dieses meistens durch das Hauptobjektiv hindurch, also koaxial. Das Licht, das auf das Präparat auftrifft, wird von diesem reflektiert und im Mikroskop abgebildet.

Bei einer Durchlichtbeleuchtung hingegen gelangt das beleuchtende Licht durch das Objekt in das Objektiv. Dieses bedingt, dass mit dieser Beleuchtung nur mehr oder weniger lichtdurchlässige Präparate untersucht werden können. Weniger lichtabsorbierende Präparatstrukturen erscheinen dabei dunkel oder farbig auf hellem Grund. Die Lichtintensität, die hierfür notwendig ist, ist wesentlich geringer als für eine gute Auflichtbeleuchtung. Je stärker und "weißer" das Licht der Auflichtbeleuchtung ist, desto bessere Beobachtungen können mit dem Operationsmikroskop durchgeführt werden. Leistungsstarke Auflichtbeleuchtungen haben jedoch hohe Verlustleistungen, entwickeln viel Wärme, haben in der Regel auch ein hohes Gewicht und auch große Abmessungen. Um all diese genannten Nachteile zu vermeiden, sind verschiedene Lösungen vorgeschlagen worden, und zwar einserseits die Verwendung einer besseren Lichtquelle am Mikroskopkörper oder andererseits eine externe Anbringung der Lichtquelle.

Beim ersten Lösungsvorschlag liegen die Grenzen in der Leistung der heute verfügbaren Lichtquellen. Nachteilig sind vor allem das Gewicht und die Wärmeentwicklung direkt am Mikroskopkörper und eventuell den Mikroskopkörper vergrößernde Abmessungen. Des Weiteren muss für eine Stromzufuhr mit flexibler Zuleitung - eventuell sogar mit Starkstrom - zum Mikroskopkörper gesorgt sein.

Demzufolge sind Lösungen gemäß dem zweiten Vorschlag grundsätzlich vorteilhafter, weil die Anordnung der Lichtquelle außerhalb des Mikroskopkörpers die oben aufgeführten Nachteile nicht kennt. Nachteilig bleibt aber neben einer schlechteren Energiebilanz auch bei solchen Lösungen, dass ein teurer, flexibler Lichtleiter angeordnet sein muss, der die freie Bewegung des Mikroskopkörpers behindern kann.

Es stellte sich somit die Aufgabe, eine neue koaxiale Auflicht-Beleuchtungseinrichtung für ein Operationsmikroskop zu finden, die die Nachteile der beiden oben beschriebenen bekannten Lösungsvorschläge nicht kennt bzw. weitestgehend vermeidet.

Der Erfinder erkannte, dass die Verwendung einer leistungsstarken, weißes Licht emittierenden Leuchtdiode (engl.: LED = Light Emitting Diode) und deren Integration in das Mikroskop-Gerät die gestellte Aufgabe löst. Unter Integration in das Mikroskop-Gerät ist hierbei zu verstehen, dass keine extern angeordnete Auflicht-Beleuchtungseinrichtung - wie an sich bekannt - das Objektfeld von einer Seite her beleuchtet, sondern direkt am Mikroskopkörper angeordnet ist und der Beleuchtungsstrahlengang koaxial zu den Mikroskopstrahlengängen durch das Hauptobjektiv hindurch verläuft.

Wie der Erfinder herausfand, sind Farblicht emittierende Leuchtdioden mittlerweile auch für Auflichtbeleuchtungen in genügend hohen Leistungsintensitäten verfügbar. Leuchtdioden sind leicht und erzeugen "kaltes" Licht, d.h. sie erzeugen nur wenig Verlustwärme. Sie haben geringe Abmessungen und benötigen nur eine geringe Betriebsspannung, die von einer direkt angeschlossenen Batterie zur Verfügung gestellt werden kann. Dadurch, dass somit die Nachteile einer Anordnung der Beleuchtungsquelle am Mikroskopkörper nicht mehr vorliegen, muss auch nicht mehr auf die bekannte Lösung der externen Anordnung der Beleuchtungsquelle zurückgegriffen werden. Mit anderen Worten: der Nachteil eines Bewegungsfreiheit nehmenden Lichtleiters kommt nicht mehr zum Tragen, weil nichts gegen eine Anordnung der Leuchtdiode am Mikroskopkörper selbst spricht.

Hinzu kommt, dass Leuchtdioden nicht nur die Nachteile des Standes der Technik nicht kennen oder stark vermeiden, sondern sich durch zusätzliche Vorteile auszeichnen. Sie weisen eine lange Lebensdauer auf und sind sehr robust und unempfindlich gegen Erschütterungen. Die räumliche Lichtverteilung und die Farbtemperatur sind einstellbar.

Die Verwendung von Leuchtdioden für eine Durchlichtbeleuchtung ist aus der DE 199 19 096 A1 bekannt; es handelt sich hierbei jedoch - wie eingangs dargelegt - um eine Durchlichtbeleuchtung für ein monoskopisches Labormikroskop und keine Auflichtbeleuchtung für ein stereoskopisches Operationsmikroskop. Der grundlegende Unterschied zwischen Labormikroskopen und Operationsmikroskopen ist, dass Labormikroskope mit großen numerischen Aperturen (0,9) arbeiten, während bei Operationsmikroskopen kleine numerische Aperturen (0,05) eingesetzt werden.

Die einzeln oder mehrfach angeordneten Leuchtdioden sind gemäß der genannten Offenlegungsschrift nicht in den unmittelbaren Aufbau des Mikroskopkörpers koaxial integriert, sondern liegen auf einer Achse: Lichtquelle - Objekt - Mikroskop.

In der DE 198 45 603 C2 der Anmelderin ist eine Anordnung von Leuchtdioden (entweder eine Rot-Grün-Blau-Kombination von LEDs oder mehrere Weißlicht-LEDs) für eine Durchlichtbeleuchtung vorgesehen. Es ist das Kondensor-Prinzip mittels zweier Lichtquellen beschrieben, jedenfalls nicht integriert in einen Mikroskopaufbau. Gemäß den Zeichnungen handelt es sich erneut um eine Durchlichtbeleuchtung für Labormikroskope, die die erfindungsgemäße Konzeption und Integration einer LED-Beleuchtung als koaxiale Haupt-(Auflicht)-Beleuchtung eines Operationsmikroskops nicht nahe legt.

Weisterhin ist in der DE 100 30 772 A1 eine Beleuchtungsanordnung beschrieben, die sich mehrerer LEDs bedient und insbesondere für Auflichtbeleuchtungen bei Mikroskopen konzipiert ist. Es handelt sich hierbei um eine quasi autarke, ringförmig angeordnete Mehrfach-LED-Beleuchtung, die weder konstruktiv noch insbesondere optisch in den Mikroskopaufbau koaxial integriert ist und somit auch nur eine seitliche Schrägbeleuchtung des Objektes erlaubt. Relativ viele kleine, um das Objektiv ringförmig angeordnete LEDs strahlen hierbei direkt auf das Objekt, ohne dass eine Abbildung der Beleuchtung mittels irgend einer Optik vorgenommen wird.

Erfindungsgemäß ist - wie schon erwähnt - eine Weißlicht-LED-Beleuchtungsquelle als Haupt-(Auflicht)-Beleuchtung koaxial in den Mikroskopaufbau so integriert, dass deren Licht zumindest mittels des Hauptobjektivs oder zusätzlich dazu mittels einer Beleuchtungsoptik im Objektfeld abgebildet wird.

Dieses kann erfindungsgemäß u.a. in folgenden Varianten verwirklicht sein:
- als Weißlicht-LED und eine Beleuchtungsoptik nach dem Köhler'schen Prinzip;
- als Weißlicht-LED und eine Beleuchtungsoptik nach Nicht-Köhler'schem Prinzip;
- als Weißlicht-LED ohne besondere Beleuchtungsoptik eventuell mit einer Linse mit angepasster Abstrahlcharakteristik auf der LED;
- als Weißlicht-LED und zusätzliche Lichtleiter-Fasern, die sich zwischen der LED und der Beleuchtungsoptik befinden;
- als Weißlicht-LED und eine Faseroptik.

Als weitere mögliche Varianten der Erfindung kommen verschiedene LED-Beleuchtungsquellen in Betracht. Es kann sich hierbei um eine Rot-Grün-Blau-Kombination handeln, deren Mischlicht vom menschlichen Auge als weißes Licht wahrgenommen wird.

Es können jedoch auch eine oder mehrere Ein-Chip-LEDs zur Anwendung gelangen, die nach dem Lumineszenzkonversions-Prinzip arbeiten. Diese Weißlicht-Leuchtdioden sind eigentlich blaues Licht emittierende LEDs auf GaN- oder InGaN-Basis; vgl. hierzu die Zeitschrift "Elektronikpraxis", Nr. 19, S. 88 ff., vom 9. Oktober 1998.

Im Übrigen wird auf eine gleichzeitig eingereichte Anmeldung der Anmelderin hingewiesen, in der eine mehrarmige Lichtleiterweiche das von mehreren LEDs stammende Licht zusammenführt. Die Lehren der beiden Anmeldungen sollen kombinierbar sein.

Weitere Ausbildungen der Erfindung sind in den Figuren und in den abhängigen Patentansprüchen angegeben. Die Bezugszeichenliste ist Bestandteil der Offenbarung. Anhand von schematischen Figuren wird die Erfindung nachfolgend näher erläutert.

Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

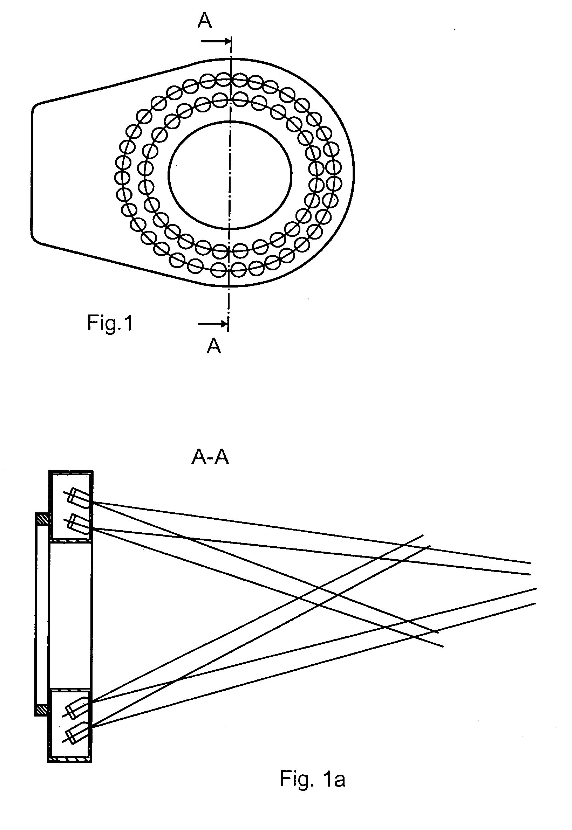

Es zeigen dabei
- Fig. 1:: als der Erfindung am nächsten liegender Stand der Technik ringförmige Auflicht-LED-Anordnungen;
- Fig. 1 a:: eine Schnittdarstellung A - A der in Fig. 1 gezeigten bekannten Anordnung;
- Fig. 2:: eine Darstellung der Anordnung der Beleuchtungseinrichtung an einem Mikroskop, bei der die Optik der Beleuchtungseinrichtung nach dem Köhler'schen Beleuchtungsprinzip verwirklicht ist;
- Fig. 3:: eine Darstellung der Anordnung der Beleuchtungseinrichtung an einem Mikroskop, bei der die Optik der Beleuchtungseinrichtung nach dem Prinzip einer Nicht-Köhler'schen Beleuchtung verwirklicht ist;
- Fig. 4:: eine Anordnung gemäß Fig. 2 oder Fig. 3 mit einer Lichtleiterfaser;
- Fig. 5:: eine Anordnung gemäß Fig. 2, bei der die Beleuchtungsoptik durch eine Linse ersetzt ist;
- Fig. 6:: eine Anordnung, bei der alle optischen Elemente der Beleuchtungseinrichtung durch eine Lichtleiterfaser ersetzt sind, und
- Fig. 7:: die Darstellung eines Stativaufbaus eines Operationsmikroskops mit einer integrierten Beleuchtungseinrichtung.

In Fig. 1 ist dargestellt, wie eine Vielzahl von LEDs in einer doppelten ringförmigen Anordnung auf einem Aufsatz für eine LED-Auflicht-Beleuchtung vorgesehen sind und somit zu der vorliegenden erfindungsgemäßen Anordnung den nächsten Stand der Technik darstellen.

Fig. 1a zeigt in einer Schnittdarstellung entlang der in Fig. 1 gesetzten Schnittebene A - A, dass die Vielzahl von LEDs in einem ringförmigen Aufsatz angebracht sind, der z.B. auf das Objektiv aufgesetzt werden kann.

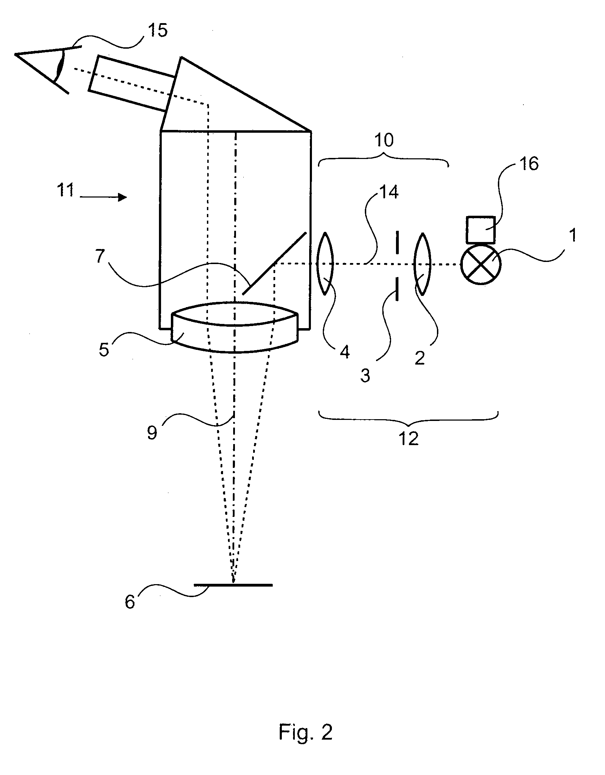

Fig. 2 zeigt, wie eine Beleuchtungseinrichtung 12 an einem Mikroskop 11 angeordnet ist. Die Beleuchtungseinrichtung 12 umfasst eine Leuchtdiode 1 mit einer integrierten Stromversorgung 16 (Batterie oder Akku) und eine Beleuchtungsoptik 10. Die Beleuchtungsoptik 10 wiederum ist nach dem Prinzip einer Köhler'schen Beleuchtung angeordnet und umfasst eine Linse 2, eine Blende 3 und eine Linse 4. Diese beiden Linsen können grundsätzlich auch Linsengruppen sein. Der Beleuchtungsstrahlengang, der von der Leuchtdiode 1 stammt und durch die Blende 3 und die Linsen 2 und 4 geht, ist symbolisch durch die Achse 14 dargestellt und trifft auf ein Umlenkelement 7. Dieses lenkt das Beleuchtungslicht durch ein Hauptobjektiv 5 koaxial zur Mikroskopachse 9 auf die Objektebene 6. Das reflektierte Beleuchtungslicht gelangt wieder zurück durch das Hauptobjektiv 5 in das Mikroskop 11 und sodann in das Beobachterauge 15.

Der grundsätzliche Vorteil einer Beleuchtungsanordnung nach dem Köhler'schen Prinzip ist eine homogene Ausleuchtung des Objektfeldes, d.h. die Lichtintensität nimmt zu dem Randbereich hin nicht ab.

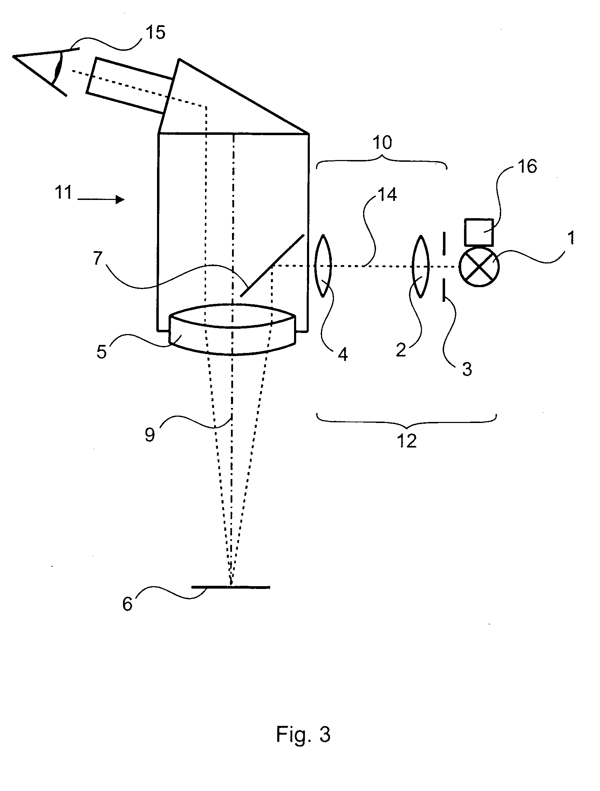

Fig. 3 zeigt die gleiche Anordnung einer Beleuchtungseinrichtung 12 an einem Mikroskop 11 wie in Fig. 2, nur ist in dieser Ausgestaltungsvariante die Beleuchtungsoptik 10 nach dem Prinzip einer Nicht-Köhler'schen Beleuchtung angeordnet.

Der Vorteil einer Beleuchtungsanordnung nach dem Prinzip einer Nicht-Köhler'schen Beleuchtung ist die kurze und kompakte Bauweise, weiterhin das helle Leuchtfeld-Zentrum und die Tatsache, dass die Homogenität, d.h. die Helligkeit des Leuchtfeld-Zentrums im Verhältnis zur Leuchtfeld-Randzone, beeinflussbar ist.

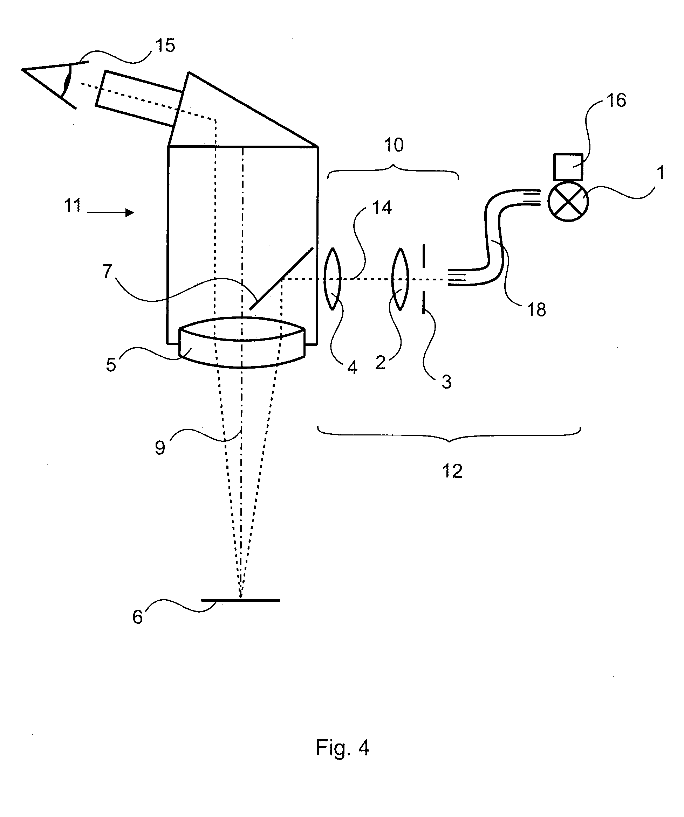

In Fig. 4 ist eine Beleuchtungsvorrichtung 12 dargestellt, die um eine Lichtleiterfaser 18 ergänzt ist. Diese Lichtleiterfaser 18 ist zwischen der Leuchtdiode 1 und der Beleuchtungsoptik 10 angeordnet. Es kann hierbei dahingestellt bleiben, ob die Beleuchtungsoptik 10 - wie hier dargestellt - nach Nicht-Köhler'schem Prinzip oder nach Köhler'schem Prinzip (Fig. 2) angeordnet ist.

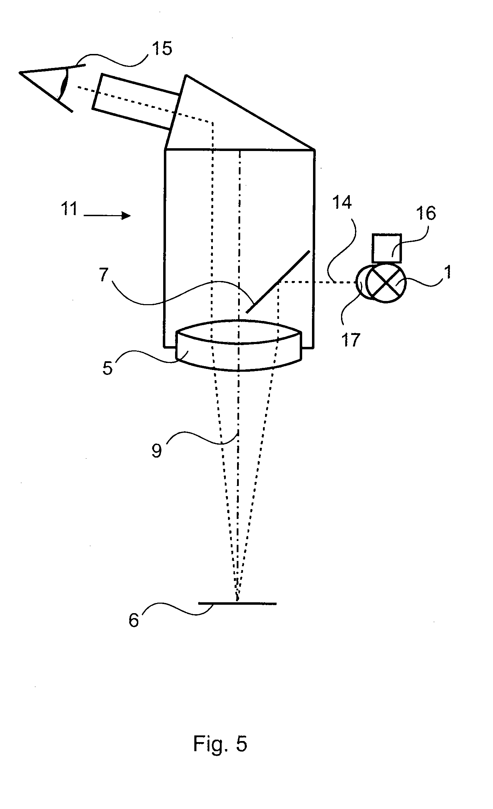

Fig. 5 zeigt ein Stereooperationsmikroskop mit einer LED-Beleuchtungsvorrichtung, die auf die in den bisherigen Figuren dargestellten Beleuchtungsoptiken 10 verzichtet und stattdessen eine Linse 17 mit angepasster Abstrahlcharakteristik verwendet. Diese Linse 17 kann - wie dargestellt - unmittelbar auf der Leuchtdiode 1 angebracht sein.

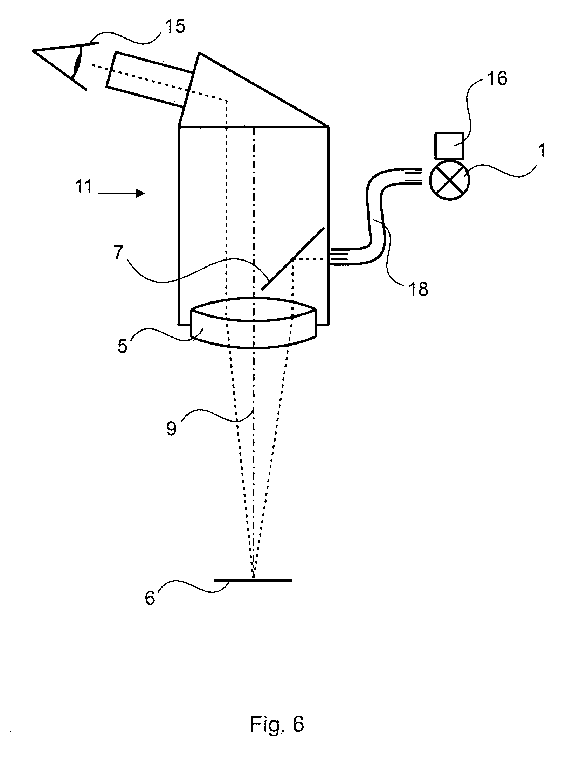

Fig. 6 zeigt die Anordnung einer Beleuchtungsvorrichtung, die statt der bisher beschriebenen optischen Elemente der Beleuchtungsvorrichtung nur eine Lichtleiterfaser 18 verwendet.

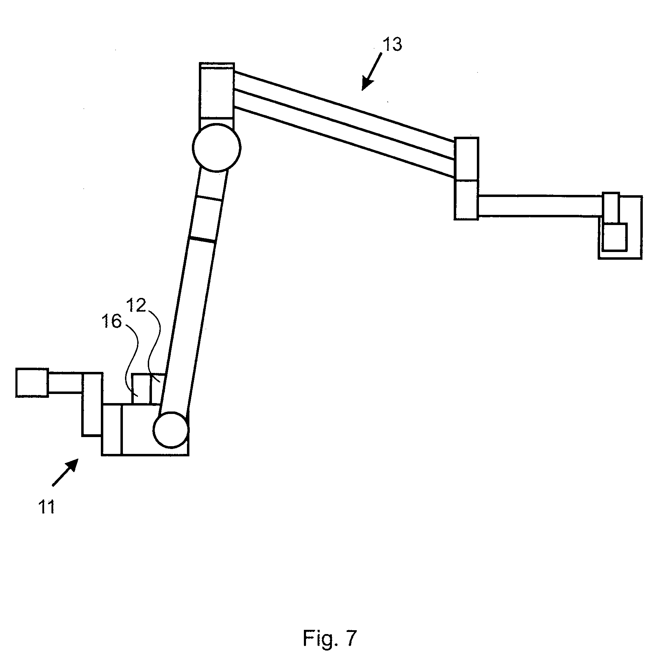

In Fig. 7 ist ein Stativaufbau 13 für ein Mikroskop 11 gezeigt, sei es für ein Wand-, Decken- oder Bodenstativ. Die Beleuchtungseinrichtung 12 hat geringe Ausmaße und ist am Stativaufbau integriert. Dadurch, dass sie mit einer integrierten Stromversorgung 16 (Batterie oder Akku) ausgestattet ist, ist es nicht erforderlich, durch das oder entlang dem Stativ 13 Strom oder Licht zuführende Kabel oder Lichtleiter vorzusehen, die die freie Bewegung des Stativs 13 einschränken könnten.

### Bezugszeichenliste

- 1 -: Leuchtdiode
- 2 -: Linse
- 3 -: Blende
- 4 -: Linse
- 5 -: Hauptobjektiv
- 6 -: Objektebene
- 7 -: Umlenkelement
- 9 -: Mikroskopachse
- 10 -: Beleuchtungsoptik
- 11 -: Mikroskop
- 12 -: LED-Beleuchtungsvorrichtung
- 13 -: Mikroskopstativ
- 14 -: Achse des Beleuchtungsstrahlengangs
- 15 -: Beobachterauge
- 16 -: integrierte Stromversorgung (Batterie oder Akku)
- 17 -: Linse mit angepasster Abstrahlcharakteristik
- 18 -: Lichtleiterfaser
- A-A -: Schnittebene

## Patentansprüche

1. Stereooperationsmikroskop mit einer in den Mikroskopaufbau (11) integrierten Auflicht-Beleuchtungseinrichtung (12), **dadurch gekennzeichnet, dass** wenigstens eine, weißes Beleuchtungslicht (14) emittierende Leuchtdiode (1), eine Beleuchtungsoptik (10) und ein Umlenkelement (7) so angeordnet sind, dass die Objektebene (6) mit dem Beleuchtungslicht (14) im Koaxial-Auflicht-Beleuchtungsverfahren beleuchtbar ist.

2. Operationsmikroskop nach Anspruch 1, **dadurch gekennzeichnet, dass** in der integrierten Auflicht-Beleuchtungseinrichtung (12) zur Stromversorgung der Auflichtbeleuchtung wenigstens eine integrierte Stromversorgung (16) (eine Batterie oder ein Akku) angeordnet ist.

3. Operationsmikroskop nach Anspruch 2, **dadurch gekennzeichnet, dass** die Beleuchtungsoptik (10) nach dem Köhler'schen Beleuchtungsprinzip angeordnet bzw. ausgebildet ist.

4. Operationsmikroskop nach Anspruch 2, **dadurch gekennzeichnet, dass** die Beleuchtungsoptik (10) nach dem Prinzip einer Nicht-Köhler'schen Beleuchtung angeordnet ist.

5. Operationsmikroskop nach Anspruch 2, **dadurch gekennzeichnet, dass** zwischen der Beleuchtungsoptik (10) und der Leuchtdiode (1) eine Lichtleiterfaser (18) angeordnet ist.

6. Operationsmikroskop nach Anspruch 2, **dadurch gekennzeichnet, dass** die Beleuchtungsoptik (10) durch eine Linse mit angepasster Abstrahlcharakteristik (17) ersetzt ist.

7. Operationsmikroskop nach Anspruch 2, **dadurch gekennzeichnet, dass** die Beleuchtungsoptik (10) durch wenigstens eine Lichtleiterfaser (18) ersetzt ist.

8. Operationsmikroskop nach einem der vorhergehenden Ansprüche, **dadurch gekennzeichnet, dass** die Leuchtdiode (1) eine Ein-Chip-LED ist, die nach dem Lumineszenzkonversions-Prinzip arbeitet.

9. Operationsmikroskop nach einem der vorhergehenden Ansprüche, **dadurch gekennzeichnet, dass** das weiße Beleuchtungslicht (14) aus der wenigstens einen als Weißlicht-LED ausgebildeten Leuchtdiode (1) oder aus einer Gruppe von rotem, grünem und blauem Farblicht emittierenden Leuchtdioden stammt.

10. Operationsmikroskop nach einem der vorhergehenden Ansprüche, **dadurch gekennzeichnet, dass** die Farbtemperatur des Beleuchtungslichts (14) mittels eines Potentiometers oder eines Spannungswandlers einstellbar ist.

11. Verwendung einer Leuchtdiode (1) zur Auflicht-Beleuchtung der Objektebene (6) eines Stereooperationsmikroskops durch Integration derselben in den Mikroskopaufbau (11), wobei der Beleuchtungsstrahlengang (14) wenigstens annähernd koaxial zum Mikroskopstrahlengang (9) geführt ist.
